(19)

Europäisches Patentamt

European Patent Office

Office européen des brevets

(11) **EP 3 894 799 B1**

(12) **EUROPÄISCHE PATENTSCHRIFT**

(45) Veröffentlichungstag und Bekanntmachung des Hinweises auf die Patenterteilung:
**01.11.2023 Patentblatt 2023/44**

(21) Anmeldenummer: **19808758.7**

(22) Anmeldetag: **21.11.2019**

(51) Internationale Patentklassifikation (IPC):
***G01F 1/667*** *(2022.01)*

(52) Gemeinsame Patentklassifikation (CPC):
**G01F 1/667**

(86) Internationale Anmeldenummer:
**PCT/EP2019/082014**

(87) Internationale Veröffentlichungsnummer:
**WO 2020/120090 (18.06.2020 Gazette 2020/25)**

(54) **ULTRASCHALLWANDLERANORDNUNG EINER CLAMP-ON-ULTRASCHALL-DURCHFLUSSMESSSTELLE, UND EINE CLAMP-ON-ULTRASCHALL-DURCHFLUSSMESSSTELLE SOWIE VERFAHREN ZUR INBETRIEBNAHME DER CLAMP-ON-ULTRASCHALL-DURCHFLUSSMESSSTELLE**

ULTRASOUND TRANSDUCER ARRANGEMENT OF A CLAMP-ON ULTRASOUND FLOW MEASURING UNIT, AND A CLAMP-ON ULTRASOUND FLOW MEASURING UNIT AND METHOD FOR STARTING UP THE CLAMP-ON ULTRASOUND FLOW MEASURING UNIT

AGENCEMENT DE TRANSDUCTEURS ULTRASONORES D'UN APPAREIL DE MESURE DE DEBIT A ULTRASONS A PINCES, ET APPAREIL DE MESURE DE DEBIT A ULTRASONS A PINCES ET PROCEDE DE MISE EN MARCHE DE L'APPAREIL DE MESURE DE DEBIT A ULTRASONS A PINCES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.12.2018 DE 102018132055**

(43) Veröffentlichungstag der Anmeldung:
**20.10.2021 Patentblatt 2021/42**

(73) Patentinhaber: **Endress + Hauser Flowtec AG
4153 Reinach (CH)**

(72) Erfinder:
- **GRUNWALD, Sascha
  79585 Steinen (DE)**
- **BRUMBERG, Oliver
  79618 Rheinfelden (DE)**
- **MURRAY, Alexander
  4059 Basel (CH)**

- **BERGER, Andreas
  4228 Erschwil (CH)**
- **WIEST, Achim
  79576 Weil am Rhein (DE)**

(74) Vertreter: **Penner, Paul
Endress + Hauser Group Services
(Deutschland) AG+Co. KG
PatServe
Colmarer Straße 6
79576 Weil am Rhein (DE)**

(56) Entgegenhaltungen:
| | |
|---|---|
| **EP-A1- 2 154 491** | **WO-A1-95/17650** |
| **WO-A1-2009/156250** | **WO-A1-2018/162340** |
| **DE-A1-102012 109 234** | **GB-A- 2 185 818** |
| **JP-A- S59 214 714** | **US-A- 4 141 149** |
| **US-A- 4 838 127** | **US-B1- 6 575 043** |
| **US-B2- 7 832 282** | |

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Clamp-On-Ultraschall-Durchflussmessstellen werden anstelle von Inline-Durchflussmessstellen mit in einem Messrohr integrierten Ultraschallwandlern eingesetzt, wenn ein Einbau eines Messrohrs einer Inline-Durchflussmessstelle umständlich oder unmöglich ist. Clamp-On-Ultraschall-Durchflussmessstellen sind deutlich einfacher einzurichten und an verschiedenen Messrohren einsetzbar, weisen jedoch den Nachteil auf, dass Ultraschallwandler einer solchen Messstelle ab Werk allenfalls grob aufeinander eingestellt werden können.

Der Stand der Technik zeigt Ultraschallwandleranordnungen von solchen Durchflussmessstellen, bei welchen die Ultraschallwandler verschiebbar zueinander eingerichtet sind, um eine Feineinstellung durchführen zu können. Dies erfordert jedoch Fachkenntnisse und auch einen gewissen Zeitaufwand. Eine Umgehung dieser Problematik wird in der DE102008029772A1 vorgestellt, bei welcher zwei Gruppen jeweils mehrerer Ultraschallwandler auf einer Außenseite eines Messrohrs angebracht sind, wobei benachbarte Ultraschallwandler einer jeweiligen Gruppe kleine Abstände zueinander aufweisen, wobei diese Abstände zwischen den jeweiligen Gruppen leicht unterschiedlich sind. Dadurch wird erreicht, dass aufgrund einer Vielzahl von Ultraschallwandlern in vielen Fällen ein durch einen Ultraschallsignalpfad verbundenes Ultraschallwandlerpaar existiert und somit kleine Änderungen von Prozessparametern wie beispielsweise Schallgeschwindigkeit durch Wechsel des Ultraschallwandlerpaars kompensiert werden können.

Die EP2154491A1 beschreibt ein Ultraschall-Durchflussmessgerät, bei welchem eine Ultraschallabstrahlungsrichtung durch Ansteuerung von Ultraschallwandlern einer Gruppe von Ultraschallwandlern eingestellt wird.

Die WO2009/156250A1 beschreibt ein Ultraschall-Durchflussmessgerät mit zwei Gruppen von Ultraschallwandlern, welche auf einer Seite eines Messrohrs angeordnet sind. Beide Ultraschallwandler umfassen jeweils ein Koppelelement auf dem eine Vielzahl an elektromechanischen Ultraschall-Wandlerelemente angeordnet sind. Diese Art von Anordnung ist vorteilhaft für die Diagnose der Ultraschall-Wandlerelemente. Das in einer Diagnosephase ermittelte Ultraschall-Wandlerelement-Paar mit der größten Signalstärke wird während einer Messphase zur Bestimmung der Prozessgröße verwendet. Für die Ermittlung der Prozessgröße muss jedoch separat der Messrohrdurchmesser bereitgestellt werden.

Aufgabe der Erfindung ist es, eine Ultraschallwandleranordnung einer Clamp-On Ultraschall-Durchflussmessstelle und eine Clamp-On-Ultraschall-Durchflussmessstelle vorzuschlagen, bei welcher die Ultraschallwandleranordnung weitgehend unabhängig von einem Messrohrdurchmesser einsetzbar ist.

Die Aufgabe wird gelöst durch eine Ultraschallwandleranordnung gemäß dem unabhängigen Anspruch 1, sowie einer Clamp-On-Ultraschall-Durchflussmessstelle gemäß dem Anspruch 6, sowie Verfahren zur Inbetriebnahme der Ultraschall-Durchflussmessstelle gemäß der Ansprüche 9, 12 und 13.

Eine erfindungsgemäße Ultraschallwandleranordnung einer Clamp-On-Ultraschall-Durchflussmessstelle basierend auf dem Laufzeitdifferenzenprinzip umfasst:

mehrere Ultraschallwandler welche dazu eingerichtet sind, auf einer Außenseite eines Messrohrs der Clamp-On-Durchflussmessstelle angeordnet zu werden,
wobei die Ultraschallwandler jeweils mindestens ein Wandlerelement zum Erzeugen und/oder Empfangen von Ultraschallsignalen sowie ein Koppelelement aufweisen, wobei das Koppelelement eine erste Kontaktfläche und eine zweite Kontaktfläche aufweist, wobei das Wandlerelement auf der ersten Kontaktfläche angeordnet ist, und wobei der Ultraschallwandler dazu eingerichtet ist, mittels der zweiten Kontaktfläche mit dem Messrohr kontaktiert zu werden, wobei die Ultraschallwandler dazu eingerichtet sind, Ultraschallsignale in das Messrohr einzustrahlen und/oder aus dem Messrohr austretende Ultraschallsignale zu empfangen,
wobei die zweiten Kontaktflächen jeweils eine Normale aufweisen, wobei die Normalen eine Ebene definieren, in welcher Ebene Ultraschallsignalpfade der Ultraschallsignale verlaufen, wobei eine erste Gruppe erster Ultraschallwandler bezüglich eines Messrohrlängsschnitts auf einer ersten Seite des Messrohrs angeordnet ist, und wobei eine zweite Gruppe zweiter Ultraschallwandler auf einer der ersten Seite gegenüberliegenden zweiten Seite des Messrohrlängsschnitts angeordnet ist,
wobei die Koppelelemente erster Ultraschallwandler und zweiter Ultraschallwandler jeweils eine Längsachse aufweisen, wobei die Längsachse jeweils einen Innenwinkel $\alpha$ zur entsprechenden zweiten Kontaktfläche aufweist, wobei der Ultraschallsignalpfad im Koppelelement entlang der Längsachse verläuft, wobei mindestens ein erster/zweiter Ultraschallwandler dazu eingerichtet ist, Ultraschallsignale eines zweiten/ersten Ultraschallwandlers zu empfangen,
wobei benachbarte Ultraschallwandler der ersten Gruppe jeweils erste Abstände zueinander aufweisen, und wobei benachbarte Ultraschallwandler der zweiten Gruppe jeweils zweite Abstände zueinander aufweisen, wobei der erste Abstand und der zweite Abstand ungleich sind,
dadurch gekennzeichnet, dass $2*A1 >= A2 >= 1.125*A1$, und insbesondere $1.75*A1 >= A2 >= 1.16*A1$, und bevorzugt $1.6*A1 >= A2 >= 1.25*A1$, wobei ein Zusammenhang zwischen erstem Abstand und zweitem Abstand folgender Gleichung:

3       EP 3 894 799 B1       4

(a+1)*A1=a*A2 mit b > a > 1, a natürliche Zahl und b kleiner 9, und insbesondere kleiner 7, und bevorzugt kleiner 5,

wobei die erste Gruppe Ultraschallwandler eine erste Anzahl von Ultraschallwandlern aufweist, und wobei eine zweite Gruppe Ultraschallwandler eine zweite Anzahl von Ultraschallwandlern aufweist,

wobei Folgendes gilt:

Anz1 größer oder gleich a+1 und insbesondere größer oder gleich a+2,

Anz2 größer oder gleich a+1 und insbesondere größer oder gleich a+2.

In einer Ausgestaltung weisen die Wandlerelemente eine radiale Ausdehnung rA auf, wobei $rA > 3/(4*a)*A1*\cos(\alpha)$,

und insbesondere

$$rA > 1/(2*a)*A1*\cos(\alpha).$$

In einer Ausgestaltung umfasst die Ultraschallwandleranordnung zumindest einen dritten Ultraschallwandler, welcher einen Signalpfad aufweist, welcher senkrecht zur zweiten Kontaktfläche verläuft.

In einer Ausgestaltung sind die erste Gruppe Ultraschallwandler und die zweite Gruppe Ultraschallwandler jeweils von einem Trägerkörper gehalten, welcher Trägerkörper zum Positionieren und Halten der Ultraschallwandler eingerichtet ist.

In einer Ausgestaltung sind die Ultraschallwandler im Trägerkörper jeweils einzeln gehalten.

Eine erfindungsgemäße Clamp-On-Ultraschall-Durchflussmessstelle zum Messen einer Durchflussgeschwindigkeit eines durch ein Messrohr strömenden Mediums umfasst:

das Messrohr zum Führen eines Mediums mit einer Messrohrachse,

eine Ultraschallwandleranordnung gemäß einem der vorigen Ansprüche, wobei die Ultraschallwandleranordnung parallel zur Messrohrachse ausgerichtet ist,

eine elektronische Mess-/Betriebsschaltung zum Betreiben der Ultraschallwandler sowie zum Ermitteln und Bereitstellen von Messwerten der Durchflussgeschwindigkeit.

In einer Ausgestaltung umfasst die Clamp-On-Ultraschall-Durchflussmessstelle einen Krümmungssensor zur Bestimmung eines Außendurchmessers des Messrohrs,

wobei der Krümmungssensor einen Abstandssensor und einen Abstandshalter aufweist,

wobei der Abstandshalter einen Zentralbereich und zwei an den Zentralbereich anschließende Enden aufweist, wobei die Enden durch eine Biegung oder einen Knick oder einen Winkel vom Zentralbereich abgegrenzt sind,

wobei der Abstandshalter dazu eingerichtet ist, mittels der Enden mit dem Messrohr kontaktiert zu werden, wobei der Zentralbereich dazu eingerichtet ist, vom Messrohr beabstandet zu sein, und wobei ein Querschnitt oder Längsschnitt durch den Abstandshalter durch beide Enden dazu eingerichtet ist, parallel zu einem Messrohrquerschnitt zu verlaufen,

wobei der Abstandssensor im Zentralbereich am Abstandshalter angeordnet ist,

wobei die elektronische Mess-/Betriebsschaltung dazu eingerichtet ist, den Abstandssensor zu betreiben.

In einer Ausgestaltung ist der Abstandssensor ein optischer oder akustischer Abstandssensor.

Bei einem erfindungsgemäßen Verfahren zur Inbetriebnahme der Clamp-On-Ultraschall-Durchflussmessstelle senden mehrere erste Ultraschallwandler / mehrere zweite Ultraschallwandler gleichzeitig oder zeitlich versetzt jeweils ein Ultraschallsignal aus, welche von zweiten Ultraschallwandlern / ersten Ultraschallwandlern empfangen werden,

wobei die elektronische Mess-/Betriebsschaltung anhand von Signalstärke und/oder Signal/Rauschen-Verhältnis der empfangenen Ultraschallsignale zumindest ein für einen Messbetrieb zu verwendendes Ultraschallwandlerpaar bestimmt.

In einer Ausgestaltung sind die Ultraschallsignale quasikontinuierlich und unterscheiden sich in ihrer Frequenz,

oder die Ultraschallsignale sind gepulst und unterscheiden sich in folgendem Merkmal:
Zentralfrequenz eines Frequenzspektrums.

In einer Ausgestaltung, wird ein Medium durch das Messrohr geführt,

wobei bei empfangenen Ultraschallsignalen Ultraschallsignalanteile auf ein Vorhandensein einer Laufzeitdifferenz untersucht werden,

wobei Ultraschallsignalanteile ohne Laufzeitdifferenz bei der Bestimmung eines zu verwendenden Ultraschallwandlerpaars ausgeschlossen werden.

3

Bei einem erfindungsgemäßen Verfahren zur Inbetriebnahme des Clamp-On-Ultraschall-Durchflussmessstelle,

wird der dritte Ultraschallwandler dazu veranlasst, ein Ultraschallsignal auszusenden und zu empfangen,

wobei die elektronische Mess-/Betriebsschaltung einen Außendurchmesser und/oder Innendurchmesser anhand von mindestens einer Signaleigenschaft des empfangenen Ultraschallsignals bestimmt,

wobei nutzbare Signaleigenschaften beispielsweise sind:
Laufzeit einer Signalreflektion.

Bei einem erfindungsgemäßen Verfahren zur Inbetriebnahme des Clamp-On-Ultraschall-Durchflussmessstelle bestimmt die elektronische Mess-/Betriebsschaltung einen Außendurchmesser mittels des Krümmungssensors zur Bestimmung eines Außendurchmessers.

Fig. 1 skizziert zwei Ultraschallwandler einer erfindungsgemäßen Anordnung;

Fig. 2 skizziert geometrische Zusammenhänge einer erfindungsgemäßen Anordnung von Ultraschallwandlern;

Fig. 3 skizziert eine beispielhafte erfindungsgemäße Anordnung von Ultraschallwandlern;

Fig. 4 skizziert eine beispielhafte erfindungsgemäße Anordnung von Ultraschallwandlern;

Fig. 5 skizziert eine Anordnung in einem Trägerkörper;

Fig. 6 skizziert eine Durchflussmessstelle mit einer erfindungsgemäßen Anordnung;

Fig. 7 skizziert einen Krümmungssensor.

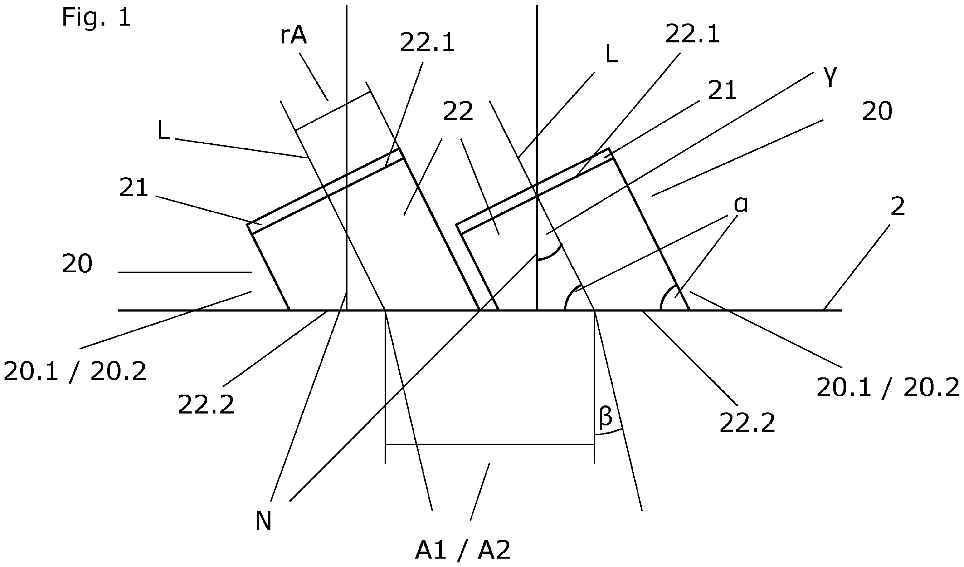

Fig. 1 skizziert einen schematischen Aufbau von beispielhaften Ultraschallwandlern 20 und einen Teil einer erfindungsgemäßen Anordnung umfassend zwei erste Ultraschallwandler 20.1 bzw. zwei zweite Ultraschallwandler 20.2, welche an einer Außenseite einer Messrohrwandung eines Messrohrs 2 angeordnet sind. Ein Ultraschallwandler weist jeweils mindestens ein Wandlerelement 21, bevorzugt ein piezoelektrisches Wandlerelement und ein Koppelelement 22, wobei das Wandlerelement an einer ersten Kontaktfläche 22.1 des Koppelelements angeordnet ist, und wobei das Koppelelement über eine zweite Kontaktfläche 22.2 mit dem Messrohr akustisch und mechanisch gekoppelt ist. Das Koppelelement weist eine Längsachse L auf, entlang welcher vom Wandlerelement 21 erzeugte, oder über die Kontaktfläche 22.2 aufgenommene Ultraschallsignale sich fortbewegen. Das Wandlerelement ist bevorzugt scheibenförmig und weist eine radiale Ausdehnung rA auf. Die radiale Ausdehnung des Wandlerelements entspricht nicht notwendigerweise einer radialen Ausdehnung des Koppelelements, in Fig. 1 ist dies aus zeichnerischen Gründen dargestellt. Die Längsachse weist gegenüber einer Normalen N der zweiten Kontaktfläche einen Winkel $\gamma$ auf, so dass Ultraschallsignale schräg in das Messrohr eingekoppelt werden. Im Messrohr weist ein Ultraschallsignalpfad einen Winkel $\beta$ zur Normalen auf, welcher Winkel $\beta$ im Allgemeinen unterschiedlich zum Winkel $\gamma$ ist, sobald eine Schallgeschwindigkeit im Koppelelement anders ist als eine Schallgeschwindigkeit im Medium. Benachbarte erste Ultraschallwandler 20.1 weisen einen ersten Abstand A1 zueinander auf. Entsprechendes gilt für benachbarte zweite Ultraschallwandler, welche einen zweiten Abstand A2 zueinander aufweisen.

Typische Werte für den Winkel $\gamma$ sind 30° bis 45° abhängig von den für das Koppelement sowie Messrohr verwendeten Materialien und vom durch das Messrohr strömenden Medium.

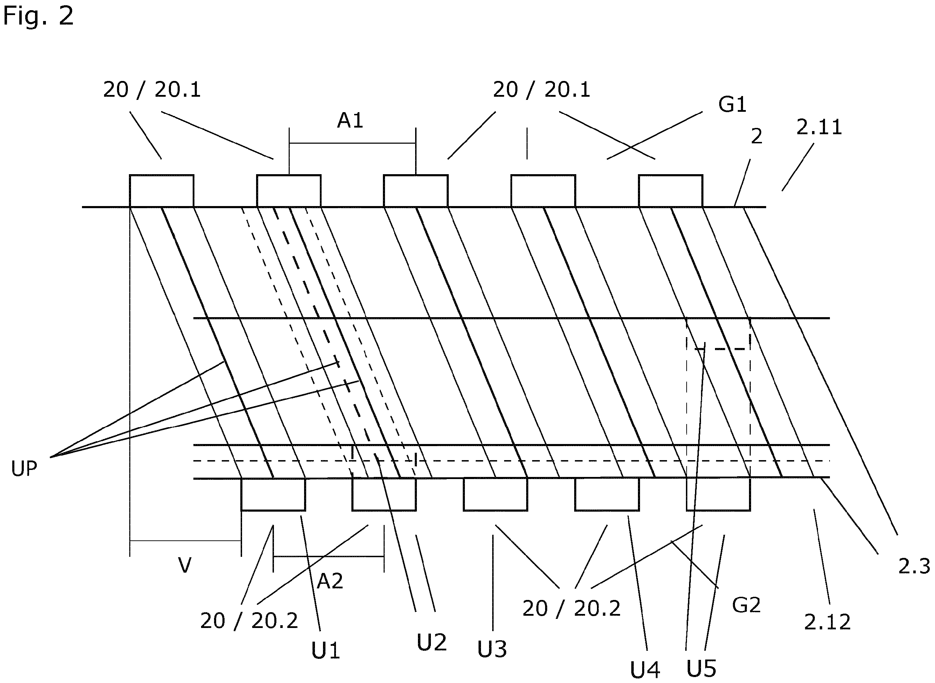

Fig. 2 skizziert geometrische Zusammenhänge einer erfindungsgemäßen Anordnung von Ultraschallwandlern, wobei eine erste Gruppe G1 Ultraschallwandler 20 von ersten Ultraschallwandlern 20.1 auf einer bezüglich eines Messrohrlängsschnitts ersten Seite 2.11 des Messrohrs 2 angeordnet sind, und wobei eine zweite Gruppe G2 Ultraschallwandler 20 von zweiten Ultraschallwandlern 20.2 auf einer zweiten, der ersten Seite gegenüberliegenden Seite 2.12 des Messrohrs 2 angeordnet sind. Die hier gewählte Anzahl von jeweils fünf Ultraschallwandlern pro Gruppe ist der Darstellung geschuldet und nicht einschränkend auszulegen.

Die ersten Ultraschallwandler 20.1 weisen den ersten Abstand A1 zwischen Nachbarn auf, und die zweiten Ultraschallwandler 20.2 weisen den zweiten Abstand A2 zwischen Nachbarn auf, wobei die Abstände A1 und A2 verschieden voneinander sind. Dies hat zur Folge, dass bei Überlagerung eines durch einen ersten Ultraschallwandler definierten Ultraschallsignalpfad UP mit einem durch einen zweiten Ultraschallwandler definierten Ultraschallsignalpfad UP, siehe die jeweils ersten Ultraschallwandler der linken Seite, bei durch andere erste Ultraschallwandler und zweite Ultraschallwandler keine Überlagerung von Ultraschallsignalpfaden zustande kommt. Dies ist angedeutet durch die zweiten Ultraschallwandler von der linken Seite durch eine durchgezogene Linie und eine gestrichelte Linie. In letzterem Fall ist eine durch einen empfangenden Ultraschallwandler erfasste Signalamplitude eines empfangenen Ultraschallsignals geringer als bei einer Überlagerung der Signalpfade zwischen zwei Ultraschallwandlern.

Da Ultraschallsignale senkrecht zu ihrer Ausbreitung entlang eines Ultraschallsignalpfads eine räumliche Ausdehnung aufweisen, hat eine zunehmende Abweichung zweier Ultraschallsignalpfade zwischen einem sendenden Ultraschallwandler und einem empfangenden Ultraschallwandler eine Verringerung einer Ultraschallsignalamplitude zur Folge.

Aufgrund der unterschiedlichen Abstände A1 und A2 gibt es verschiedene Messrohrdurchmesser, bei welchen sich der Ultraschallsignalpfad eines ersten Ultraschallwandlers 20.1 und der Ultraschallsignalpfad eines zweiten Ultraschallwandlers 20.2 überlagern. Dies ist angedeutet mit den Ultraschallwandlern U2 und U5. Daraus lässt sich für die Ultraschallwandleranordnung eine maximale relevante Ultraschallsignalpfadabweichung ableiten. Dies ist dann der Fall, wenn ein Messrohrdurchmesser einen Wert aufweist, welcher genau zwischen zwei Messrohrdurchmesserwerten liegt, bei welchen sich der Ultraschallsignalpfad eines ersten Ultraschallwandlers 20.1 und der Ultraschallsignalpfad eines zweiten Ultraschallwandlers 20.2 überlagern.

Bevorzugt weisen die Wandlerelemente eine radiale Ausdehnung rA auf, wobei $rA > 3/(4*a)*A1 * sin(a)$, und insbesondere $rA > 1/(2*a)*A1* sin(a)$, bzw. wobei $rA > 3/(4*a)*A1*cos(\gamma)$, und insbesondere $rA > 1/(2*a)*A1*cos(\gamma)$.

Eine Ultraschallsignalaufweitung außer Acht lassend hätte eine maximale relevante Abweichung in diesem Fall einen Versatz eines Ultraschallsignalpfads entlang einer Messrohrachse von einem Drittel einer Ultraschallsignalbreite parallel zur Messrohrachse zu Folge. Es hat sich gezeigt, dass in diesem Fall eine Ultraschallsignalamplitude bei einem zum Empfang bestimmten Ultraschallwandler noch ausreichend für eine gute Signalverarbeitung ist.

Es wird also durch Einrichten unterschiedlicher Abstände A1 und A2 eine über einen großen Messrohrdurchmesserbereich sinnvolle Ultraschall-Durchflussmessung ermöglicht.

Eine hier vernachlässigte Wandstärke des Messrohrs 2 beeinflusst einen Schalleintrittspunkt in das Medium relativ zum Koppelelement. Ein Fachmann wird dies gegebenenfalls berücksichtigen.

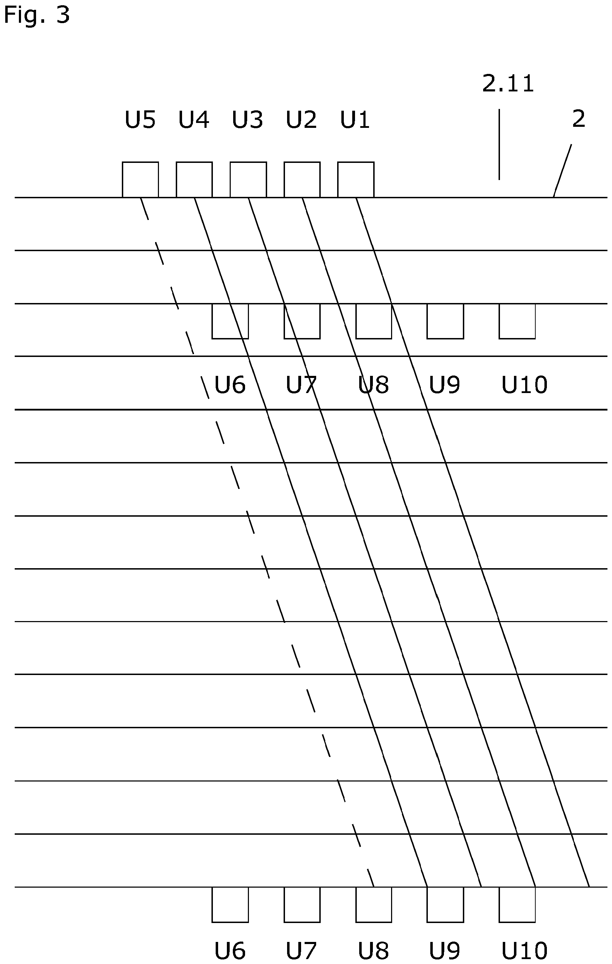

Fig. 3 zeigt eine beispielhafte erfindungsgemäße, demonstrative Anordnung von Ultraschallwandlern an einem Messrohr 2, bei welcher der Parameter a = 3 gewählt ist. Die von den Ultraschallwandlern U1 bis U5 einer ersten Gruppe Ultraschallwandler ausgehenden schrägen Linien zeigen den Verlauf von Ultraschallsignalpfaden. Die waagerechten Linien deuten Messrohrdurchmesser an, bei welchen Ultraschallsignalpfade ausgehend von den Ultraschallwandlern U6 bis U10 einerzweiten Gruppe Ultraschallwandlern mit Ultraschallsignalpfaden der ersten Gruppe Ultraschallwandler übereinstimmen. Um die Auswirkung verschiedener Messrohrdurchmesser aufzuzeigen, ist die zweite Gruppe Ultraschallwandler zweifach skizziert. Bei einem kleinen Messrohrdurchmesser können beispielsweise die Ultraschallwandler U4 und U6 ein verwendbares Ultraschallwandlerpaar bilden. Für große Durchmesser kann ein äußerer Ultraschallwandler, wie hier gezeigt U5 nötig sein, um ein Ultraschallwandlerpaar mit einem Ultraschallwandler U8 der jeweils anderen Gruppe bilden zu können. Je nach Messrohrdurchmesser können also verschiedene Ultraschallwandler der beiden Gruppen von Ultraschallwandler verwendet werden.

Für die erste Gruppe Ultraschallwandler mit einer ersten Anzahl Anz1 Ultraschallwandler aufweist und für die zweite Gruppe Ultraschallwandler mit einer zweiten Anzahl Anz2 Ultraschallwandler gilt bevorzugt: Anz1 größer oder gleich a+1 und insbesondere größer oder gleich a+2, und Anz2 größer oder gleich a+1 und insbesondere größer oder gleich a+2. Anz1 und Anz2 müssen also nicht wie in Fig. 3 gezeigt 5 oder gleich sein.

Je größer Anz1 bzw. Anz2, desto größer ist ein mit einer erfindungsgemäßen Anordnung Ultraschallwandler nutzbarer Messrohrdurchmesserbereich.

Ein Fachmann wird eine Ultraschallwandleranordnung gemäß seiner Bedürfnisse zusammenstellen.

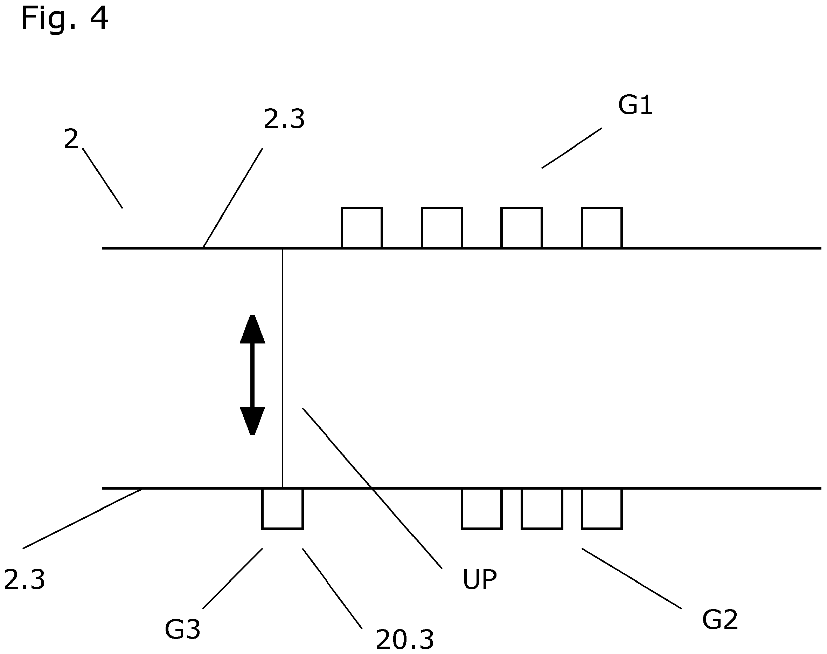

Fig. 4 zeigt eine erfindungsgemäße beispielshafte Anordnung von Ultraschallwandlern mit einer ersten Gruppe G1, einer zweiten Gruppe G2 von Ultraschallwandler und einer dritten Gruppe G3 mit einem dritten Ultraschallwandler 20.3.

Der dritte Ultraschallwandler ist dazu eingerichtet, Ultraschallsignale senkrecht zur Messrohrwandung 2.3 in das Messrohr 2 einzustrahlen und die an einer gegenüberliegenden Messrohrseite reflektierten Ultraschallsignale zu empfangen. Anhand einer Signallaufzeit kann auf einen Messrohrdurchmesser geschlossen werden und damit bei Inbetriebnahme der einer Clamp-On-Ultraschall-Durchflussmessstelle ein zu verwendendes Paar Ultraschallwandler mit einem Ultraschallwandler der ersten Gruppe und einem Ultraschallwandler der zweiten Gruppe ausgewählt werden kann. Somit kann ein Testen verschiedener Ultraschallwandler der ersten und zweiten Gruppe eingeschränkt oder vermieden werden.

Die hier gezeigten Anzahlen und Orientierungen der Ultraschallwandler sind rein beispielhaft und haben demonstrativen Charakter und sind nicht einschränkend auszulegen.

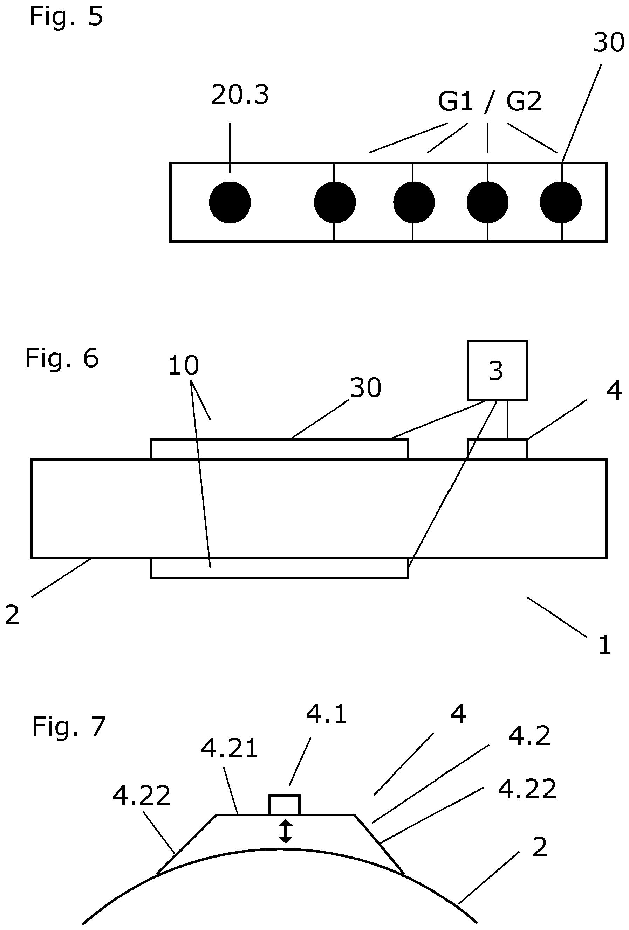

Fig. 5 skizziert Ultraschallwandler einer ersten Gruppe G1 oder zweiten Gruppe G2, welche in einem Trägerkörper 30 angeordnet und durch diesen gehalten sind. Der Trägerkörper kann Positionierelemente aufweisen, mittels welcher die Ultraschallwandler beim Einbau in den Trägerkörper in einer Sollposition positionierbar sind. Nach Positionierung können die Ultraschallwandler im Trägerkörper vergossen werden. Die Ultraschallwandler können im Trägerkörper beispielsweise einzeln gehalten sein, so dass eine Anpassung an eine beispielsweise raue oder unebene Messrohroberfläche möglich ist. Diese Skizze ist bezüglich der Anzahl und Anordnung der Ultraschallwandler beispielhaft und nicht einschränkend auszulegen. In einem solchen Trägerkörper kann auch wie hier gezeigt ein dritter Ultraschallwandler 20.3 angeordnet sein.

Fig. 6 skizziert eine beispielhafte Clamp-On-Ultraschall-Durchflussmessstelle 1 mit einem Messrohr 2, einer erfindungsgemäßen Ultraschallwandleranordnung 10, einen Trägerkörper 30 zum Halten der Ultraschallwandleranordnung, einen Krümmungssensor 4 zum Bestimmen einer Messrohrkrümmung und eine elektronische Mess-/Betriebsschaltung zu Betreiben der Ultraschallwandler, des Krümmungssensors und zum Bereitstellen von Durchflussmesswerten. Eine Clamp-On-Ultraschall-Durchflussmessstelle muss keinen Krümmungssensor aufweisen.

Fig. 7 skizziert einen Aufbau eines Krümmungssensors 4, mittels welchem ein Messrohraußendurchmesser bestimmt werden kann. Bei Kenntnis des Messrohraußendurchmessers und einer Messrohrwandstärke lässt sich ein zu verwendendes Ultraschallwandlerpaar vorbestimmen. Ein Krümmungssensor weist einen Abstandssensor 4.1 und einen Abstandshalter 4.2 auf, welcher Abstandshalter einen Zentralbereich 4.21 und zwei vom Zentralbereich abgewinkelte Enden 4.22 aufweist. Der Abstandshalter wird parallel zu einem Messrohrquerschnitt des Messrohrs 2 an das Messrohr angelegt, wobei der Zentralbereich einen messrohraußendurchmesserabhängigen Abstand zu einer Messrohraußenfläche aufweist. Dieser Abstand wird mit dem im Zentralbereich angebrachten Abstandssensor 4.1 ausgemessen. Ein solcher Sensor kann beispielsweise ein Ultraschallsensor oder ein optischer Sensor sein.

Eine Inbetriebnahme der Clamp-On-Ultraschall-Durchflussmessstelle erfordert ein Bestimmen eines Ultraschallwandlerpaars umfassend einen ersten Ultraschallwandler und einen zweiten Ultraschallwandler. Dazu kann wie bereits erwähnt mittels eines dritten Ultraschallwandlers ein Messrohrinnendurchmesser sowie eine Messrohrwandstärke bestimmt werden und dadurch ein Ultraschallwandlerpaar bestimmt werden. Alternativ oder zusätzlich kann auch wie bereits erwähnt ein Krümmungssensor eingesetzt werden. Alternativ oder zusätzlich können mehrere erste und/oder zweite Ultraschallwandler gleichzeitig oder zeitlich versetzt Ultraschallsignale aussenden. Eine Auswahl eines Ultraschallwandlerpaars kann dann beispielsweise anhand einer Ultraschallsignalamplitude, welche mittels zum Empfang bestimmten Ultraschallwandlern gemessen wird, bestimmt werden. Zwecks Unterscheidung können verschiedene zum Aussenden von Ultraschallsignalen verwendete Ultraschallwandler den Ultraschallsignalen jeweils ein oder mehrere Merkmale aufprägen. Beispielsweise kann bei gepulsten Ultraschallsignalen eine Zentralfrequenz charakteristisch sein. Alternativ oder zusätzlich kann beispielsweise können Ultraschallsignale unterschiedlichen Signalchirp aufweisen.

Bei der Inbetriebnahme kann auch ein Medium durch das Messrohr geführt und eine Laufzeitdifferenzenmessung von Ultraschallsignalen durchgeführt werden. Dabei können Ultraschallsignale ohne oder zu geringer Laufzeitdifferenz von einer Berücksichtigung ausgeschlossen werden. Solche Signale sind beispielsweise Signale, welche von einem ursprünglichen Ultraschallsignal in das Messrohr eingekoppelt werden, ohne das Medium zu durchlaufen. Bei einem empfangenden Ultraschallwandler können also ausgehend von einem ursprünglichen Ultraschallsignal mehrere durch unterschiedliche Reflektionen verursachte Ultraschallsignale zeitlich überlagert oder zeitlich versetzt eintreffen.

**Bezugszeichenliste**

| | |
|---|---|
| 1 | Clamp-On-Ultraschall-Durchflussmessstelle |
| 2 | Messrohr |
| 2.11 | erste Messrohrseite |
| 2.12 | zweite Messrohrseite |
| 2.2 | Messrohrachse |
| 2.3 | Messrohrwandung |
| 3 | elektronische Mess-/Betriebsschaltung |
| 4 | Krümmungssensor |
| 4.1 | Abstandssensor |
| 4.2 | Abstandshalter |
| 4.21 | Zentralbereich |
| 4.22 | Ende |
| 10 | Ultraschallwandleranordnung |
| 20 | Ultraschallwandler |
| 20.1 | erster Ultraschallwandler |
| 20.2 | zweiter Ultraschallwandler |
| 20.3 | dritter Ultraschallwandler |
| 21 | Wandlerelement |
| 22 | Koppelelement |
| 22.1 | erste Kontaktfläche |
| 22.2 | zweite Kontaktfläche |
| 30 | Trägerkörper |
| Anz1 | erste Anzahl |
| Anz2 | zweite Anzahl |
| A1 | erster Abstand |
| A2 | zweiter Abstand |
| UP | Ultraschallsignalpfad |
| N | Normale |
| U1 - U9 | Ultraschallwandler |
| G1 | erste Gruppe |
| G2 | zweite Gruppe |
| G3 | dritte Gruppe |

**Patentansprüche**

1. Ultraschallwandleranordnung (10) einer Clamp-On-Ultraschall-Durchflussmessstelle (1) basierend auf dem Laufzeitdifferenzenprinzip umfassend:

mehrere Ultraschallwandler (20) welche dazu eingerichtet sind, auf einer Außenseite einer Messrohrwandung (2.3) eines Messrohrs (2) der Clamp-On-Durchflussmessstelle angeordnet zu werden,
wobei die Ultraschallwandler (20) jeweils mindestens ein Wandlerelement (21) zum Erzeugen und/oder Empfangen von Ultraschallsignalen sowie ein Koppelelement (22) aufweisen, wobei das Koppelelement eine erste Kontaktfläche (22.1) und eine zweite Kontaktfläche (22.2) aufweist, wobei das Wandlerelement auf der ersten Kontaktfläche angeordnet ist, und wobei der Ultraschallwandler dazu eingerichtet ist, mittels der zweiten Kontaktfläche mit dem Messrohr kontaktiert zu werden,

wobei die Ultraschallwandler dazu eingerichtet sind, Ultraschallsignale in das Messrohr einzustrahlen und/oder aus dem Messrohr austretende Ultraschallsignale zu empfangen,

wobei die zweiten Kontaktflächen jeweils eine Normale (N) aufweisen, wobei die Normalen eine Ebene definieren, in welcher Ebene Ultraschallsignalpfade UP der Ultraschallsignale verlaufen,

wobei eine erste Gruppe erster Ultraschallwandler (G1) bezüglich eines Messrohrlängsschnitts auf einer ersten Seite des Messrohrs (2.11) angeordnet ist, und wobei eine zweite Gruppe (G2) zweiter Ultraschallwandler auf einer der ersten Seite gegenüberliegenden zweiten Seite (2.12) des Messrohrlängsschnitts angeordnet ist,

wobei die Koppelelemente erster Ultraschallwandler (20.1) und zweiter Ultraschallwandler (20.2) jeweils eine Längsachse (L) aufweisen, wobei die Längsachse jeweils einen Innenwinkel ($\alpha$) zur entsprechenden zweiten Kontaktfläche aufweist, wobei der Ultraschallsignalpfad im Koppelelement entlang der Längsachse verläuft,

wobei mindestens ein erster/zweiter Ultraschallwandler (20.1 20.2) dazu eingerichtet ist, Ultraschallsignale eines zweiten/ersten Ultraschallwandlers (20.2 20.1) zu empfangen,

wobei benachbarte Ultraschallwandler der ersten Gruppe jeweils erste Abstände (A1) zueinander aufweisen, und wobei benachbarte Ultraschallwandler der zweiten Gruppe jeweils zweite Abstände (A2) zueinander aufweisen, wobei der erste Abstand und der zweite Abstand ungleich sind,

**dadurch gekennzeichnet, dass** 2*A1 >= A2 >= 1.125*A1, und insbesondere 1.75*A1 >= A2 >= 1.16*A1, und bevorzugt 1.6*A1 >= A2 >= 1.25*A1,

wobei ein Zusammenhang zwischen erstem Abstand (A1) und zweitem Abstand (A2) folgender Gleichung entspricht:

(a+1)*A1=a*A2 mit b > a > 1, a natürliche Zahl und b kleiner 9, und insbesondere kleiner 7, und bevorzugt kleiner 5,
wobei die erste Gruppe Ultraschallwandler (G1) eine erste Anzahl (Anz1) von Ultraschallwandlern aufweist, und wobei eine zweite Gruppe Ultraschallwandler (G2) eine zweite Anzahl (Anz2) von Ultraschallwandlern aufweist,
wobei Folgendes gilt:

Anz1 größer oder gleich a+1 und insbesondere größer oder gleich a+2,
Anz2 größer oder gleich a+1 und insbesondere größer oder gleich a+2.

2. Ultraschallwandleranordnung nach Anspruch 1,

wobei die Wandlerelemente (21) eine radiale Ausdehnung rA aufweisen, wobei rA > 3/(4*a)*A1* sin(a),
und insbesondere

$$rA > 1/(2*a)*A1* \sin(\alpha).$$

3. Ultraschallwandleranordnung nach einem der vorigen Ansprüche,
umfassend eine dritte Gruppe (G3) mit zumindest einem dritten Ultraschallwandler (20.3), welcher einen Signalpfad aufweist, welcher senkrecht zur zweiten Kontaktfläche (22.2) verläuft.

4. Ultraschallwandleranordnung nach einem der vorigen Ansprüche,
wobei die erste Gruppe Ultraschallwandler (G1) und die zweite Gruppe Ultraschallwandler (G2) jeweils von einem Trägerkörper (30) gehalten sind, welcher Trägerkörper zum Positionieren und Halten der Ultraschallwandler eingerichtet ist.

5. Ultraschallwandleranordnung nach Anspruch 4,
wobei die Ultraschallwandler (20) im Trägerkörper (30) jeweils einzeln gehalten sind.

6. Clamp-On-Ultraschall-Durchflussmessstelle (1) zum Messen einer Durchflussgeschwindigkeit eines durch ein Messrohr (2) strömenden Mediums umfassend:

das Messrohr (2) zum Führen eines Mediums mit einer Messrohrachse (2.1),
eine Ultraschallwandleranordnung (10) gemäß einem der vorigen Ansprüche, wobei die Ultraschallwandleranordnung parallel zur Messrohrachse ausgerichtet ist,
eine elektronische Mess-/Betriebsschaltung (3) zum Betreiben der Ultraschallwandler (20) sowie zum Ermitteln und Bereitstellen von Messwerten der Durchflussgeschwindigkeit.

7. Clamp-On-Ultraschall-Durchflussmessstelle nach Anspruch 6,

umfassend einen Krümmungssensor (4) zur Bestimmung eines Außendurchmessers des Messrohrs (2),
wobei der Krümmungssensor einen Abstandssensor (4.1) und einen Abstandshalter (4.2) aufweist,
wobei der Abstandshalter einen Zentralbereich (4.21) und zwei an den Zentralbereich anschließende Enden (4.22) aufweist, wobei die Enden durch eine Biegung oder einen Knick oder einen Winkel vom Zentralbereich abgegrenzt sind, wobei der Abstandshalter dazu eingerichtet ist, mittels der Enden mit dem Messrohr kontaktiert zu werden, wobei der Zentralbereich dazu eingerichtet ist, vom Messrohr beabstandet zu sein, und wobei ein Querschnitt oder Längsschnitt durch den Abstandshalter durch beide Enden dazu eingerichtet ist, parallel zu einem Messrohrquerschnitt zu verlaufen, wobei der Abstandssensor im Zentralbereich am Abstandshalter angeordnet ist, wobei die elektronische Mess-/Betriebsschaltung (3) dazu eingerichtet ist, den Abstandssensor zu betreiben.

8. Clamp-On-Ultraschall-Durchflussmessstelle nach Anspruch 7,
wobei der Abstandssensor (4.1) ein optischer oder akustischer Abstandssensor ist.

9. Verfahren zur Inbetriebnahme der Clamp-On-Ultraschall-Durchflussmessstelle (1) nach einem der Ansprüche 6 bis 8,

wobei mehrere erste Ultraschallwandler (20.1) / mehrere zweite Ultraschallwandler (20.2) gleichzeitig oder zeitlich versetzt jeweils ein Ultraschallsignal aussenden, welche von zweiten Ultraschallwandlern / ersten Ultraschallwandlern empfangen werden,
wobei die elektronische Mess-/Betriebsschaltung (3) anhand von Signalstärke und/oder Signal/Rauschen-Verhältnis der empfangenen Ultraschallsignale zumindest ein für einen Messbetrieb zu verwendendes Ultraschallwandlerpaar bestimmt.

10. Verfahren nach Anspruch 9,

wobei die Ultraschallsignale quasikontinuierlich sind und sich in ihrer Frequenz unterscheiden, oder wobei die Ultraschallsignale gepulst sind und sich in folgendem Merkmal unterscheiden: Zentralfrequenz eines Frequenzspektrums.

11. Verfahren nach Anspruch 9 oder 10,

wobei ein Medium durch das Messrohr (2) geführt wird,
wobei bei empfangenen Ultraschallsignalen Ultraschallsignalanteile auf ein Vorhandensein einer Laufzeitdifferenz untersucht werden,
wobei Ultraschallsignalanteile ohne Laufzeitdifferenz bei der Bestimmung eines zu verwendenden Ultraschallwandlerpaars ausgeschlossen werden.

12. Verfahren nach einem der Ansprüche 9 bis 11 mit einer Ultraschallwandleranordnung gemäß Anspruch 3,

wobei der dritte Ultraschallwandler (20.3) dazu veranlasst wird, ein Ultraschallsignal auszusenden und zu empfangen,
wobei die elektronische Mess-/Betriebsschaltung (3) einen Außendurchmesser und/oder Innendurchmesser anhand von mindestens einer Signaleigenschaft des empfangenen Ultraschallsignals bestimmt,
wobei nutzbare Signaleigenschaften beispielsweise sind: Laufzeit einer Signalreflektion.

13. Verfahren nach einem der Ansprüche 9 bis 11 mit einer Ultraschallwandleranordnung gemäß einem der Ansprüche 7 bis 8, wobei die elektronische Mess-/Betriebsschaltung (3) einen Außendurchmesser mittels des Krümmungssensors (4) zur Bestimmung eines Außendurchmessers bestimmt.

**Claims**

1. An ultrasonic transducer arrangement (10) for a clamp-on ultrasonic flow measuring point (1) based on the principle of a time-of-flight difference, comprising:

a plurality of ultrasonic transducers (20) which are configured to be arranged on an outside of a measuring tube wall (2.3) of a measuring tube (2) of the clamp-on flow measuring point, wherein the ultrasonic transducers (20) each have at least one transducer element (21) for generating and/or receiving ultrasonic signals and a coupling element (22), wherein the coupling element has a first contact area (22.1) and a second contact area (22.2), wherein the transducer element is arranged on the first contact area, and wherein the ultrasonic transducer is configured to come into contact with the measuring tube by means of the second contact area, wherein the ultrasonic transducers are configured to radiate ultrasonic signals into the measuring tube and/or to receive ultrasonic signals coming from the measuring tube,

wherein the second contact areas each have a normal (N), wherein the normals define a plane, in which plane ultrasonic signal paths UP of the ultrasonic signals run, wherein a first group (G1) of first ultrasonic transducers is arranged on a first side of the measuring tube (2.11) relative to a longitudinal section of the measuring tube, and wherein a second group (G2) of second ultrasonic transducers is arranged on a second side (2.12) of the longitudinal section of the measuring tube opposite the first section,
wherein the coupling elements of the first ultrasonic transducers (20.1) and second ultrasonic transducers (20.2) each have a longitudinal axis (L), wherein the longitudinal axis in each case has an internal angle ($\alpha$) relative to the corresponding second contact area, wherein the ultrasonic signal path in the coupling element runs along the longitudinal axis,
wherein
at least one first/second ultrasonic transducer (20.1 20.2) is configured to receive ultrasonic signals from a second/first ultrasonic converter (20.2 20.1),
wherein adjacent ultrasonic transducers of the first group are each at first distances (A1) from one another, and wherein adjacent ultrasonic transducers of the second group are each at second distances (A2) from one another, wherein the first distance and the second distance are not the same,
**characterized in that** $2*A1 >= A2 >= 1.125*A1$, and in particular $1.75*A1 >= A2 >= 1.16*A1$, and preferably $1.6*A1 >= A2 >= 1.25*A1$,
wherein a relationship between the first distance (A1) and the second distance (A2) corresponds to the following equation:

$(a+1)*A1=a*A2$ where $b > a > 1$, a is a natural number and b is less than 9, and in particular less than 7, and preferably less than 5,
wherein the first group (G1) of ultrasonic transducers has a first number (Anz1) of ultrasonic transducers, and wherein a second group (G2) of ultrasonic transducers has a second number (Anz2) of ultrasonic transducers,
wherein the following applies:

Anz1 is greater than or equal to a+1 and in particular is greater than or equal to

$$a+2,$$

Anz2 is greater than or equal to a+1 and in particular is greater than or equal to

$$a+2.$$

2. The ultrasonic transducer arrangement as claimed in claim 1,

wherein the transducer elements (21) have a radial expansion rA, wherein $rA > 3/(4*a)*A1*\sin(a)$,
and in particular

$$rA > 1/(2*a)*A1*\sin(\alpha).$$

3. The ultrasonic transducer arrangement as claimed in one of the preceding claims,
comprising a third group (G3) with at least one third ultrasonic transducer (20.3) which has a signal path which runs perpendicularly to the second contact area (22.2).

4. The ultrasonic transducer arrangement as claimed in one of the preceding claims,
wherein the first group (G1) of ultrasonic transducers and the second group (G2) of ultrasonic transducers are each held by a support body (30), which support body is configured to position and hold the ultrasonic transducers.

5. The ultrasonic transducer arrangement as claimed in claim 4,
wherein the ultrasonic transducers (20) are each held individually in the support body (30).

6. A clamp-on ultrasonic flow measuring point (1) for measuring a flow speed of a medium flowing through a measuring tube (2) comprising:

The measuring tube (2) for conducting a medium with a measuring tube axis (2.1),
an ultrasonic transducer arrangement (10) as claimed in one of the preceding claims, wherein the ultrasonic transducer arrangement is configured parallel to the measuring tube axis,
an electronic measuring/operating circuit (3) for operation of the ultrasonic transducers (20) and for determining and providing measurement values of the flow speed.

7. The clamp-on ultrasonic flow measuring point as claimed in claim 6,

comprising a curvature sensor (4) for determining an external diameter of the measuring tube (2),

wherein the curvature sensor has a distance sensor (4.1) and a spacer (4.2),

wherein the spacer has a central region (4.21) and two ends (4.22) adjoining the central region, wherein the ends are delimited from the central region by a bend or a kink or an angle,

wherein the spacer is configured to be brought into contact with the measuring tube by means of the ends, wherein the central region is configured to be spaced apart from the measuring tube, and wherein a cross section or longitudinal section through the spacer through both ends is configured to run parallel to a measuring tube cross section,

wherein the distance sensor is arranged in the central region on the spacer,

wherein the electronic measuring/operating circuit (3) is configured to operate the distance sensor.

8. The clamp-on ultrasonic flow measuring point as claimed in claim 7,
wherein the distance sensor (4.1) is an optical or acoustic distance sensor.

9. A method for commissioning the clamp-on ultrasonic flow measuring point (1) as claimed in one of claims 6 to 8,

wherein a plurality of first ultrasonic transducers (20.1)/a plurality of second ultrasonic transducers (20.2) each send an ultrasonic signal simultaneously or with a delay, said ultrasonic signal being received by second ultrasonic transducers/first ultrasonic transducers,

wherein the electronic measuring/operating circuit (3) determines at least one ultrasonic transducer pair to be used for measurement operation based on the signal strength and/or signal-to-noise ratio of the received ultrasonic signals.

10. The method as claimed in claim 9,
wherein the ultrasonic signals are virtually continuous and have different frequencies, or wherein the ultrasonic signals are pulsed and differ in terms of the following characteristic: Central frequency of a frequency spectrum.

11. The method as claimed in claim 9 or 10,

wherein a medium is conducted through the measuring tube (2),

wherein ultrasonic signal components of received ultrasonic signals are checked for the presence of a time-of-flight difference,

wherein ultrasonic signal components without a time-of-flight difference are excluded when determining an ultrasonic transducer pair to be used.

12. The method as claimed in one of claims 9 to 11 with an ultrasonic transducer arrangement as claimed in claim 3,

wherein the third ultrasonic transducer (20.3) is made to send and receive an ultrasonic signal, wherein the electronic measuring/operating circuit (3) determines an external diameter and/or internal diameter based on at least one signal property of the received ultrasonic signal, wherein usable signal properties include: Time of flight of a signal reflection.

13. The method as claimed in one of claims 9 to 11 with an ultrasonic

transducer arrangement as claimed in one of claims 7 to 8,

wherein the electronic measuring/operating circuit (3) determines an external diameter using the curvature sensor (4) for determining an external diameter.

**Revendications**

1. Arrangement de convertisseurs ultrasonores (10) d'un point de mesure de débit ultrasonore de type Clamp-On (1), lequel arrangement comprend :

plusieurs convertisseurs ultrasonores (20), lesquels sont conçus pour être disposés sur un côté extérieur d'une paroi de tube de mesure (2.3) d'un tube de mesure (2) du point de mesure de débit de type Clamp-On,

les convertisseurs ultrasonores (20) présentant chacun au moins un élément convertisseur (21) destiné à générer et/ou recevoir des signaux ultrasonores ainsi qu'un élément de couplage (22), l'élément de couplage présentant une première surface de contact (22.1) et une deuxième surface de contact (22. 2), l'élément convertisseur étant disposé sur la première surface de contact, et le convertisseur ultrasonore étant conçu pour être mis en contact avec le tube de mesure au moyen de la deuxième surface de contact,

les transducteurs ultrasonores étant conçus pour émettre des signaux ultrasonores dans le tube de mesure et/ou pour recevoir des signaux ultrasonores sortant du tube de mesure,

les deuxièmes surfaces de contact présentant chacune une normale (N), les normales définissant un plan, plan dans lequel plan des chemins de signaux ultrasonores UP des signaux ultrasonores,

un premier groupe de premiers convertisseurs ultrasonores (G1) étant disposé sur un premier côté du tube de mesure (2.11), et un deuxième groupe (G2) de deuxièmes convertisseurs ultrasonores étant disposé sur un deuxième côté (2.12), opposé au premier côté, de la section longitudinale du tube de mesure, les éléments de couplage des premiers convertisseurs ultrasonores (20.1) et des deuxièmes convertisseurs ultrasonores (20.2) présentant chacun un axe longitudinal (L), l'axe longitudinal présentant chacun un angle intérieur ($\alpha$) par rapport à la deuxième surface de contact correspondante, le chemin de signal ultrasonore dans l'élément de couplage s'étendant le long de l'axe longitudinal,

au moins un premier/deuxième convertisseur ultrasonore (20.1, 20.2) étant conçu pour recevoir des signaux ultrasonores d'un deuxième/premier convertisseur ultrasonore (20.2, 20.1), des convertisseurs ultrasonores voisins du premier groupe présentant respectivement des premières distances (A1) entre eux, et des convertisseurs ultrasonores voisins du deuxième groupe présentant respectivement des deuxièmes distances (A2) entre eux, la première distance et la deuxième distance étant inégales, **caractérisé en ce que** 2*A1 >= A2 >= 1,125*A1, et notamment 1,75*A1 >= A2 >= 1,16*A1, et de préférence 1,6*A1 >= A2 >= 1,25*A1, une relation entre la première distance (A1) et la deuxième distance (A2) correspondant à l'équation suivante :

(a+1)*A1=a*A2 avec b > a > 1, a étant un nombre naturel et b étant inférieur à 9, et notamment inférieur à 7, et de préférence inférieur à 5, le premier groupe de convertisseurs ultrasonores (G1) comprenant un premier nombre (Anz1) de convertisseurs ultrasonores, et un deuxième groupe de convertisseurs ultrasonores (G2) comprenant un deuxième nombre (Anz2) de convertisseurs ultrasonores, lesquels nombres obéissent aux relations suivantes :

Anz1 supérieur ou égal à a+1 et notamment supérieur ou égal à a+2, Anz2 supérieur ou égal à a+1 et notamment supérieur ou égal à a+2.

2. Arrangement de convertisseurs ultrasonores selon la revendication 1,

pour lequel les éléments convertisseurs (21) présentent une extension radiale rA, avec rA > 3/(4*a)*A1* sin($\alpha$), et notamment

$$rA > 1/(2{*}a){*}A1{*}\ sin(\alpha).$$

3. Arrangement de convertisseurs ultrasonores selon l'une des revendications précédentes, lequel arrangement comprend un troisième groupe (G3) avec au moins un troisième convertisseur ultrasonore (20.3), lequel convertisseur présente un chemin de signal qui s'étend perpendiculairement à la deuxième surface de contact (22.2).

4. Arrangement de convertisseurs ultrasonores selon l'une des revendications précédentes, pour lequel le premier groupe de convertisseurs ultrasonores (G1) et le deuxième groupe de convertisseurs ultrasonores (G2) sont chacun maintenus par un corps de support (30), lequel corps de support est conçu pour positionner et maintenir les convertisseurs ultrasonores.

5. Arrangement de convertisseurs ultrasonores selon la revendication 4, pour lequel les convertisseurs ultrasonores (20) sont maintenus individuellement dans le corps de support (30).

6. Point de mesure de débit ultrasonore de type Clamp-On (1) destiné à la mesure d'une vitesse d'écoulement d'un produit s'écoulant à travers un tube de mesure (2), lequel point de mesure comprend :

le tube de mesure (2) destiné à guider un produit et lequel tube présente un axe de tube de mesure (2.1), un arrangement de convertisseurs ultrasonores (10) selon l'une des revendications précédentes, l'arrangement de convertisseurs ultrasonores étant orienté parallèlement à l'axe du tube de mesure, un circuit électronique de mesure / d'exploitation (3) destiné à exploiter les convertisseurs ultrasonores (20) ainsi qu'à déterminer et mettre à disposition des valeurs mesurées de la vitesse d'écoulement.

7. Point de mesure de débit ultrasonore de type Clamp-On selon la revendication 6,

lequel point de mesure comprend un capteur de courbure (4) destiné à déterminer un diamètre extérieur du tube de mesure (2), le capteur de courbure comprenant un capteur de distance (4.1) et une entretoise (4.2), l'entretoise présentant une zone centrale (4.21) et deux extrémités (4.22) se raccordant à la zone centrale, les extrémités étant délimitées par une courbure ou un coude ou un angle par rapport à la zone centrale,

l'entretoise étant conçue pour être mise en contact avec le tube de mesure au moyen des extrémités, la zone centrale étant conçue pour être espacée du tube de mesure, et une section transversale ou longitudinale de l'entretoise à travers les deux extrémités étant conçue pour être parallèle à une section transversale du tube de mesure,

le capteur de distance étant disposé dans la zone centrale sur l'entretoise,

le circuit électronique de mesure / d'exploitation (3) étant conçu pour exploiter le capteur de distance.

8. Point de mesure de débit ultrasonore de type Clamp-On selon la revendication 7,
   pour lequel le capteur de distance (4.1) est un capteur de distance optique ou acoustique.

9. Procédé destiné à la mise en service du point de mesure de débit ultrasonore de type Clamp-On (1) selon l'une des revendications 6 à 8,

   procédé pour lequel plusieurs premiers convertisseurs ultrasonores (20.1) / plusieurs deuxièmes convertisseurs ultrasonores (20.2) émettent chacun, simultanément ou de manière décalée dans le temps, un signal ultrasonore qui est reçu par des deuxièmes convertisseurs ultrasonores / des premiers convertisseurs ultrasonores,

   le circuit électronique de mesure / d'exploitation (3) déterminant, à l'aide de l'intensité du signal et/ou du rapport signal/bruit des signaux ultrasonores reçus, au moins une paire de convertisseurs ultrasonores à utiliser pour une opération de mesure.

10. Procédé selon la revendication 9,

    pour lequel les signaux ultrasonores sont quasi continus et se distinguent par leur fréquence, ou pour lequel les signaux ultrasonores sont pulsés et se distinguent par la caractéristique suivante : la fréquence centrale d'un spectre de fréquences.

11. Procédé selon la revendication 9 ou 10,

    pour lequel un produit est guidé à travers le tube de mesure (2),
    pour lequel, pour des signaux ultrasonores reçus, des parties de signaux ultrasonores sont examinées quant à la présence d'une différence de temps de propagation,

des parties de signaux ultrasonores sans différence de temps de propagation étant exclues lors de la détermination d'une paire de convertisseurs ultrasonores à utiliser.

12. Procédé selon l'une des revendications 9 à 11 avec un arrangement de convertisseurs ultrasonores selon la revendication 3,

    procédé pour lequel le troisième convertisseur ultrasonore (20.3) est amené à émettre et à recevoir un signal ultrasonore,
    le circuit électronique de mesure / d'exploitation (3) déterminant un diamètre extérieur et/ou un diamètre intérieur à partir d'au moins une caractéristique du signal ultrasonore reçu,
    des caractéristiques de signal utilisables étant par exemple :
    le temps de propagation d'une réflexion de signal.

13. Procédé selon l'une des revendications 9 à 11 avec un arrangement de convertisseurs ultrasonores selon l'une des revendications 7 à 8,
    pour lequel le circuit électronique de mesure / d'exploitation (3) détermine un diamètre extérieur au moyen du capteur de courbure (4) destiné à la détermination d'un diamètre extérieur.

Fig. 1

Fig. 2

Fig. 3

U5  U4  U3  U2  U1

2.11

2

U6  U7  U8  U9  U10

U6    U7    U8    U9    U10

# Fig. 4

2

2.3

G1

UP

2.3

G3

20.3

G2

Fig. 5

20.3

G1 / G2

30

Fig. 6

10

30

3

4

2

1

Fig. 7

4.1

4

4.2

4.21

4.22

4.22

2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008029772 A1
- EP 2154491 A1

- WO 2009156250 A1